# EUROPEAN PATENT APPLICATION

(11) **EP 4 131 606 A1**
(43) Date of publication of application: **08.02.2023**
(21) Application number: 21925163.4
(22) Date of filing: 09.02.2021
(51) Int. Cl.: H01M 50/204

(54) **BATTERY, RELATED ELECTRIC DEVICE THEREOF, AND PREPARATION METHOD AND PREPARATION DEVICE THEREFOR**

(71) Applicant: Contemporary Amperex Technology Co., Limited, Fujian PRC 352100 (CN)
(72) Inventor: WANG, Lei, Ningde, Fujian 352100 (CN); QIN, Feng, Ningde, Fujian 352100 (CN); WANG, Peng, Ningde, Fujian 352100 (CN); LI, Jinfeng, Ningde, Fujian 352100 (CN); WANG, Yongguang, Ningde, Fujian 352100 (CN)
(74) Representative: Gong, Jinping
(86) International application number: PCT/CN2021/076286
(87) International publication number: WO 2022/170490

(57) **Abstract**

The present application discloses a battery, including: a battery cell matrix including a plurality of battery cells arranged in M rows and N columns, the battery cells including a casing, end caps and two electrode terminals, the electrode terminals being respectively arranged on the two end caps of the battery cell along a column direction, and two adjacent battery cells being connected in the column direction in a manner in which the electrode terminals are opposed, M and N being integers, and M ≥ 2 and N ≥ 2; and at least one reinforcing plate extending in a row direction and fixed to the casing of the N rows of battery cells, the at least one reinforcing plate having a smaller size in the column direction than a size of the battery cells in the column direction, and being fixed to the casing of the battery cells in two adjacent rows among the M rows. The battery can prolong the service life and enhance the safety of batteries.

## Description

### TECHNICAL FIELD

The present application relates to the field of batteries, in particular to a battery and a related electrical device, a preparation method and a preparation device of the battery.

### BACKGROUND

Batteries are widely used in electronic equipment, electric vehicles, electric toys and electric equipment, such as mobile phones, notebook computers, battery cars, electric cars, electric planes, electric ships, electric toy cars, electric toy ships, electric toy planes and electric tools, etc. With the continuous development of battery technology, higher requirements are put forward for battery performance, and it is hoped that various design factors can be considered at the same time.

In the development of battery technology, besides improving the performance of the batteries, the service life and safety are also problems that cannot be ignored. If the service life of the batteries does not reach the expected time, the maintenance and use cost of the batteries will be very high. If the safety of the batteries cannot be guaranteed, the batteries cannot be used. Therefore, how to prolong the service life and enhance the safety of the batteries is an urgent technical problem to be solved in battery technology.

### SUMMARY

The present application provides a battery and a related electrical device, a preparation method and a preparation device of the battery, so as to prolong the service life of the battery and enhance the safety of the battery.

According to the first aspect of the present application, provided is a battery, which includes: a battery cell matrix and at least one reinforcing plate. The battery cell matrix includes a plurality of battery cells arranged in M rows and N columns, the battery cells include a casing, end caps and two electrode terminals, the electrode terminals are respectively arranged on the two end caps of the battery cells along a column direction, and two adjacent battery cells are connected in the column direction in a manner in which the electrode terminals are opposed, wherein M and N are integers, and M ≥ 2 and N ≥ 2. At least one reinforcing plate extends in a row direction and is fixed to the casings of N rows of battery cells; and at least one reinforcing plate has a smaller size in the column direction than a size of the battery cells in the column direction, and is fixed to the casings of the battery cells in two adjacent rows among the M rows.

In this embodiment, the reinforcing plate can play a role of fixing connection and limiting the casings of two adjacent battery cells which are opposite to each other. When the battery is in use, after vibration of the environment is transmitted to the battery, the reinforcing plate can effectively reduce the relative movement between the casings of the adjacent battery cells in all directions, thereby effectively improving the strength of the fixed connection of the battery cells, further effectively improving the stability of the battery connection and prolonging the service life of the battery. In addition, an outer area of electrical connection between the two adjacent battery cells covered by the reinforcing plate can also prevent external foreign matters from entering an electrical connection area, protect the electrical connection of the battery from short circuit or disconnection caused by foreign matters, and enhance the safety of the battery.

In some embodiments, the battery includes a plurality of reinforcing plates that are spaced in a column direction.

In this embodiment, the plurality of reinforcing plates are provided to meet the requirements of fixedly connecting casings of all adjacent battery cells that are formed opposite to each other, but not simply fixing a whole plate, and a minimum plate area is used in the case where strength is met. In this way, it can effectively improve the connection strength after the fixed connection of each butt-joint part, and also reduce the overall volume of the battery and improve the energy density of the battery.

In some embodiments, in the column direction, after two adjacent battery cells are opposed through electrode terminals, an electrical connection area is formed between opposite end caps, and each reinforcing plate is respectively arranged to cover the electrical connection area between the battery cells in two adjacent rows among the M rows, wherein in the column direction, the electrical connection area has a first width, the reinforcing plate has a second width, and the second width is larger than the first width in a range of 20 mm to 100 mm.

In this embodiment, the reinforcing plate may not completely cover the battery cell, and only needs to cover the electrical connection area within a certain size range. In this way, the strength of the fixed joint between adjacent battery cells formed opposite to each other is improved by the reinforcing plate, and at the same time, the material used for the reinforcing plate can be saved, and the manufacturing cost of the reinforcing plate can be reduced.

In some embodiments, the battery further includes a limiting member arranged on a side of the reinforcing plate that is fitted to the battery cells, the limiting member extending in the row direction, wherein the limiting member is located in the electrical connection area between the battery cells in the two adjacent rows among the M rows.

In this embodiment, the limiting member located in the electrical connection area can effectively fill a recessed area. In this way, when the battery is in use, after vibration generated in the environment is transmitted to the battery, on the one hand, the reinforcing plate is fixed with the casing of the adjacent battery cells formed opposite to each other, which can effectively reduce the dislocation of the adjacent battery cells formed opposite to each other in the row direction and avoid the failure of electrical connection. On the other hand, the limiting member can effectively reduce the relative movement of the adjacent battery cells formed opposite to each other in the column direction, thereby further improving the connection and overall strength of the battery. At the same time, part of outer surfaces of adjacent battery cells in the row direction or the column direction is reinforced and fixed by the reinforcing plate, so that the adjacent battery cells can be prevented from rotating with respect to each other and the stability of the battery can be improved. In addition, the formed limiting members can also be constructed as reinforcing ribs of the reinforcing plate, thereby effectively improving the overall structural strength of the reinforcing plate.

In some embodiments, the limiting member includes two vertical walls arranged in parallel and opposite, the vertical walls connected perpendicularly to the reinforcing plate and parallel to the end caps of the battery cells; wherein a first preset distance is arranged between the vertical walls and the end caps.

In this embodiment, the limiting member is parallel to the end caps between adjacent battery cells, which can improve the accuracy of gap control between the vertical walls and the end caps.

In some embodiments, the limiting member further includes a transverse wall for connecting the two vertical walls; wherein a second preset distance is arranged between the transverse wall and the electrode terminals of the battery cells.

In this embodiment, the overall strength of the two vertical walls of the limiting member can be improved by providing the transverse wall to connect the two vertical walls.

In some embodiments, sizes of the first preset distance and the second preset distance range from 1 mm to 3 mm.

In this embodiment, on the one hand, the formed gap can facilitate the insertion of the limiting member into the electrical connection area. On the other hand, it can effectively avoid the contact or interference between the limiting member and the end caps and the electrode terminals of the battery cells from affecting the electrical performance of the battery, especially when the limiting member is made of a conductive material, the setting of the preset distance becomes necessary. At the same time, the gap is relatively small, which can also limit the excessive relative movement between two battery cells.

In some embodiments, a plurality of receiving grooves are formed on the reinforcing plate, each of which extends in the column direction and is continuously arranged in the row direction, and the receiving grooves are used for mounting the battery cells, wherein the receiving grooves are constructed to adapt to surfaces of the battery cells.

In this embodiment, on the one hand, the formed receiving grooves are adapted to the surfaces of the battery cells, the reinforcing plate and the surfaces of the casings of the battery cells can be better bonded, so that not only the fixing strength in the column direction is improved, but also a connection area between the reinforcing plate and the casings of the battery cells is increased, and the arrangement strength among a plurality of battery cells in the row direction is improved. On the other hand, the formed receiving grooves can be further constructed as reinforcing ribs of the reinforcing plate to further improve the overall structural strength of the reinforcing plate.

In some embodiments, rib structures are also formed within each of the receiving grooves, and the rib structures extend in the column direction.

In this embodiment, the matching accuracy with the surfaces of the battery cells can be further improved through the arrangement of the rib structures, so as to improve the limiting accuracy. The self-strength of the reinforcing plate can be further improved to improve the overall connection strength of the battery.

In some embodiments, the battery includes multiple layers of battery cell matrices, an intermediate support plate, and a reinforcing backplane. The multiple layers of battery cell matrices are stacked and arranged in a vertical direction, and the reinforcing plate is arranged on a top surface of the multiple layers of battery cell matrices. The intermediate support plate is disposed between adjacent battery cell matrices for supporting and/or cooling the battery cells. The reinforcing backplane is arranged on a bottom surface of the multiple layers of battery cell matrices. The reinforcing backplane is constructed as a rectangular plate-like structure with a row direction and a column direction, and is fixed to a casing of a battery cell of a battery cell matrix at a bottom layer.

In this embodiment, the reinforcing backplane has the same effect of improving the strength of the fixed joint as the reinforcing plate, and at the same time, since it is arranged at a bottom of the battery and is arranged in the rectangular plate-like structure with the row direction and the column direction, it has a certain supporting function, thereby making the overall structure of the battery more stable.

In some embodiments, the intermediate support plate and/or the reinforcing backplane are formed with: a limiting member; and/or a receiving groove; and/or a rib structure.

In this embodiment, on the one hand, the limiting member, the receiving groove and the rib structure formed on the intermediate support plate and/or the reinforcing backplane have the same technical effects as the limiting member, the receiving groove and the rib structure described above, which are not described here since they have the same technical effects. On the other hand, the limiting member, the receiving groove and the rib structure formed on the intermediate support plate and/or the reinforcing backplane can also limit the relative movement of adjacent battery cells, thereby maintaining the consistency of the connection and arrangement positions of the battery cells in the battery.

In some embodiments, thickness of the reinforcing plate and/or the reinforcing backplane range from 0.5 mm to 2 mm.

In this embodiment, on the premise of satisfying the strength requirement, using a thinner reinforcing plate and/or a reinforcing backplane can reduce the overall volume of the battery, so as to improve the energy density of the battery.

According to the second aspect of the present application, provided is an electrical device including the battery as described in the first aspect herein, the battery being configured for providing electrical energy.

According to the third aspect of the present application, provided is a preparation method of a battery.

According to the fourth aspect of the present application, provided is a preparation device of a battery.

The battery and the related electrical device, the preparation method and the preparation device of the battery provided in the present application can strengthen the connection strength between adjacent battery cells in a plurality of battery cells forming the battery, and improve the energy density of the battery while considering the minimum volume.

### BRIEF DESCRIPTION OF DRAWINGS

The accompanying drawings, which are illustrated herein, serve to provide a further understanding for the present application and form a part of the present application, and the exemplary embodiments of the present application as well as the illustrations thereof serve to explain the present application and do not constitute an undue limitation of the present application. In the accompanying drawings:
FIG. 1 is a schematic structural diagram of a battery according to some embodiments of the present application;
FIG. 2 is a schematic structural diagram of a battery cell according to some embodiments of the present application;
FIG. 3 is a structural enlargement view of a part A of the battery shown in FIG. 1;
FIG. 4 is a front structural view of the part A of the battery shown in FIG. 3;
FIG. 5 is a structural view of a part C of the battery shown in FIG. 4;
FIG. 6 is a partial structural diagram of a reinforcing plate according to some embodiments of the present application;
FIG. 7 is a partial structural diagram of a reinforcing plate according to some embodiments of the present application;
FIG. 8 is an exploded structural diagram of the battery according to some embodiments of the present application;
FIG. 9 is a partial structural diagram of a reinforcing backplane according to some embodiments of the present application;
FIG. 10 is a flow chart of a preparation method of a battery according to some embodiments of the present application;
FIG. 11 is a flow chart of a preparation device of a battery according to some embodiments of the present application.

### DETAILED DESCRIPTION OF EMBODIMENTS

In order to make objectives, technical solutions, and advantages of the embodiments of the present application clearer, the technical solutions in the embodiments of the present application are described clearly and completely in the following with reference to accompanying drawings in the embodiments of the present application. Apparently, the described embodiments are only portion rather than all of the embodiments of the present application. Based on the embodiments of the present application, all other embodiments obtained by those ordinarily skilled in the art without exerting creative effort fall within the scope of protection of the present application.

Unless otherwise defined, all technical and scientific terms used herein have the same meanings as are commonly understood by those skilled in the art of the present application. Terms used herein in the description of the present application are for the purpose of describing specific embodiments only and are not intended to limit the present application. The terms "including" and "having" and any variations thereof in the description and claims of the present application and the above description of the drawings are intended to cover non-exclusive inclusion. It needs to be noted that the terms "first", "second" and the like in the description and claims as well or the above drawings of the present application are used to distinguish similar objects rather than describe a specific order or sequence.

In the description of the present application, it needs to be understood that orientation or positional relationships indicated by terms such as "center", "transverse", "length", "width", "up", "down", "front", "back", "left", "right", "vertical", "horizontal", "top", "bottom", "inner", "outer", "axial", "radial", "circumferential", etc. are based on the orientation or positional relationships shown in the drawings, for ease of description of the present application and simplification of the description only, these terms do not indicate or imply that the apparatus or element referred to must have a specific orientation or be constructed and operated in a specific orientation, and therefore cannot be construed as limitations to the present application.

In the description of the present application, it needs to be noted that, unless otherwise expressly specified and limited, the terms "install", "connect", "couple", "attach" need to be understood in a broad sense, for example, it may be fixed connection, detachable connection or integral connection; it may be direct connection or indirect connection by means of an intermediate medium, or may be the internal communication of two elements. For those ordinarily skilled in the art, the specific meanings of the above terms in the present application will be understood according to the specific circumstances.

"Embodiments" referred to in the present application means that a particular feature, structure, or characteristic described in connection with embodiments is included in at least one embodiment of the present application. The presence of the phrase in various places in the description does not necessarily mean the same embodiment, nor is it a separate or alternative embodiment that is mutually exclusive with other embodiments. It is explicitly and implicitly understood by those skilled in the art that the embodiments described herein may be combined with other embodiments.

The term "and/or" herein is simply a description of the association relationship of the associated objects, indicating that three relationships can exist, for example, A and/or B may indicate that A exists alone, A and B exist at the same time, and B exists alone. In addition, the character "/" herein generally means that the associated objects are in an "or" relationship.

As used in the present application, "multiple" refers to more than two (including two). Likewise, "multiple groups" refers to more than two (including two) groups, and "multiple pieces" refers to more than two (including two) pieces.

The battery cells in the present application may include a lithium-ion secondary battery, a lithium-ion primary battery, a lithium-sulfur battery, a sodium-lithium-ion battery, a sodium-ion battery, a magnesium-ion battery, and the like, and which are not limited in the embodiments of the present application. The battery cells may be cylindrical, flat, cuboid or other shapes, which are either limited in the embodiments of the present application. Battery cells are generally divided into three types according to the packaging mode: cylindrical battery cells, rectangular battery cells and pouch battery cells, which are not limited in the embodiments of the present application either.

The battery cells include an electrode assembly and an electrolyte, the electrode assembly is composed of a positive plate, a negative plate and a separator. Battery cells work mainly depending on movement of metal ions between the positive and negative plates. The positive plate includes a positive current collector and a positive active material layer, the positive active material layer is coated on a surface of the positive current collector, the current collector not coated with the positive active material layer protrudes from the current collector coated with the positive active material layer, and the current collector not coated with the positive active material layer serves as a positive tab. In case of lithium-ion batteries, a material of the positive current collector may be aluminum, and the positive active material may be lithium cobaltate, ferrous lithium phosphate, ternary lithium or lithium manganate, etc. The negative plate includes a negative current collector and a negative active material layer. The negative active material layer is coated on a surface of the negative current collector, the current collector not coated with the negative active material layer protrudes from the current collector coated with the negative active material layer, and the current collector not coated with the negative active material layer serves as a negative tab. A material of the negative current collector may be copper, and the negative active material may be carbon or silicon. In order to ensure that a large current is passed without fusing, a plurality of positive tabs are provided and stacked together, and a plurality of negative tabs are provided and stacked together. The separator may be made of PP or PE. Further, the electrode assembly may be a winding structure or a laminated structure, and the embodiment of the present application is not limited thereto. In the development of battery technology, many design factors need to be considered at the same time, such as energy density, cycle life, discharge capacity, charge-discharge rate and other performance parameters. In addition, the safety of batteries also needs to be considered.

The battery referred to in embodiments of the present application refers to a single physical module that includes one or more battery cells to provide higher voltage and capacity. For example, the battery mentioned in the present application may include a battery module or a battery pack or the like. The battery generally includes a box for encapsulating one or more battery cells. The box can avoid liquid or other foreign matter affecting the charging or discharging of the battery cells.

When a plurality of battery cells are electrically connected in series and/or in parallel to form a battery, various arrangement modes can be used to minimize the overall volume and realize various shapes of use space. When the battery is a medium and large sized battery, including a large number of battery cells as a whole, if the electrical device vibrates or is impacted in use, the battery will vibrate accordingly and may be impacted in the same way. When these vibrations and/or shocks are applied to the battery, when the connection strength between the battery cells is not enough, the relative movement between the battery cells amplifies the amplitude of vibration and/or transmits the impact of greater energy, resulting in the failure of the electrical connection between the battery cells and causing battery life problems, the safety problems of thermal runaway of the battery caused by the collision of each battery unit with each other. Therefore, for medium and large sized batteries with complex service environment, how to improve the connection and overall strength of batteries is a major problem faced by the medium and large sized batteries.

For a battery cell (such as a cuboid battery) with flat surfaces in the casing, when a plurality of battery cells are arranged, the flat surfaces can be oppositely arranged, simple heat insulation and insulation cushions are inserted in the middle, and pre-tightening force is applied during assembly, so that stable opposite positions can be maintained among the battery cells, and complex vibration and impact of various amplitudes can be resisted.

For battery cells (e.g., cylindrical batteries) with no flat surface in the casing, it is not possible to use the casing itself of the battery cells for stable position setting, and additional fixtures are required to maintain the position of each of the battery cells. Especially for the layout structure in which the battery cells are first connected in series/parallel in a first direction, connected in parallel/series in a second direction as a whole, and stacked in a third direction as a whole. The electrical connection strength of each of the battery cells in the first direction, the spaced and stable relative position of adjacent battery cells in the second direction, and the gravity support between stacked battery cell layers are major problems.

In view of this, the inventor of the present application has proposed a battery, and the design thereof will be described in detail below, which can improve the electrical connection strength of the battery cells and the overall strength of the battery. It can be understood that although the battery described in the embodiment of the present application is proposed based on the problem of medium and large sized power batteries, when the same problem exists, the battery described in the embodiment of the present application is also applicable to various devices using batteries.

The technical solution described in the embodiment of the present application is applicable to various devices using batteries, such as mobile phones, portable equipment, notebook computers, battery cars, electric toys, electric tools, electric vehicles, ships and spacecraft, etc. For example, the spacecraft includes airplanes, rockets, space shuttles and spaceships, etc.

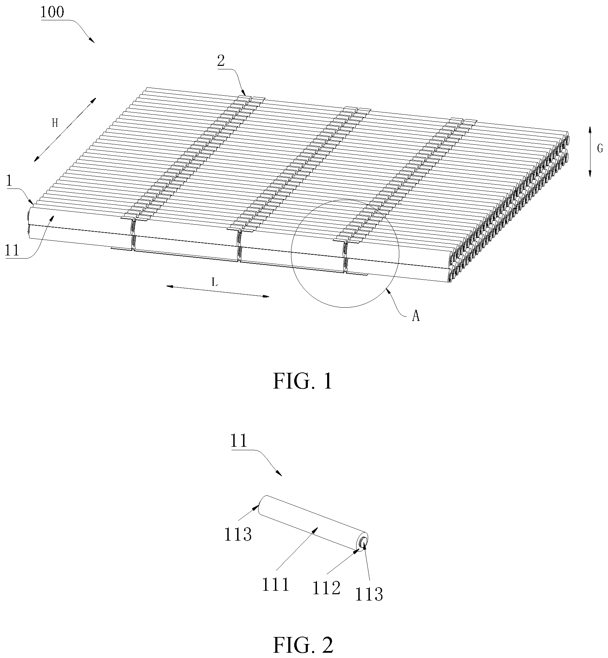

FIG. 1 shows a structure of a battery 100 provided according to the present application. As shown in FIG. 1, the battery 100 includes: a battery cell matrix 1 and at least one reinforcing plate 2. The battery cell matrix 1 includes a plurality of battery cells 11 arranged in M rows and N columns. As shown in conjunction with FIG. 2, the battery cell 11 includes a casing 111, end caps 112, and two electrode terminals 113, the electrode terminals 113 are provided on two end caps 112 of the battery cell 11 along a column direction L. As shown in conjunction with FIG. 1, a row direction is H and the column direction is L. The two adjacent battery cells 11 in the column direction L are connected are connected in such a manner that the electrode terminals 113 are opposed to each other. M and N are integers, and M ≥ 2 and N ≥ 2. At least one reinforcing plate 2 extends in the row direction H and is fixed to the casing 111 of the battery cells 11 in the N columns. At least one reinforcing plate 2 has a smaller size in the column direction L than a size of the battery 100 in the column direction L, and is fixed to the casing 111 of the battery cells 11 in two adjacent rows among the M rows.

The battery cell matrix 1 mentioned in the embodiment of the present application refers to a plurality of battery cells 11 arranged in an array on the same layer. The array arrangement means that the battery cells 11 are arranged in M rows and N columns, where M and N are integers, and M ≥ 2 and N ≥ 2, so that the battery cell matrix 1 has a row direction H and a column direction L, the battery cells 11 in the battery cell matrix 1 are arranged in parallel and side-by-side along the row direction H, and at least two battery cells 11 are arranged in the column direction L.

In the present application, the two adjacent battery cells 11 in the column direction L are connected in such a manner that the electrode terminals are opposed to each other. The battery cells 11 in adjacent rows of the battery cell matrix 1 may be connected in series or in parallel by a bus component. The opposed connection mentioned in the embodiment of the present application means that after the battery cells 11 are arranged in M rows and N columns, adjacent battery cells 11 in the same column are butted end to end through the electrode terminals.

In the present application, the battery cells 11 are the minimum power units constituting the battery 100, and the battery 100 is connected in series and/or in parallel with a certain number of battery cells 11 according to the power demand of the electrical device. The battery cells 11 may be cylindrical, cuboid, cubic or other shapes, but a certain number of the battery cells 11 need to be arranged in a reasonable manner to achieve the minimum volume of the battery 100 due to the space limitation of the power device.

The casing 111 of the battery cell 11 in the present application has a cavity for receiving the electrode assembly and other components of the battery cell 11, and the casing may be cylindrical, rectangular, cubic, prismatic, etc. The casing can be formed by processing thin plates with certain strength such as metal or rigid plastics. After the electrode assembly is placed in the casing 111, the casing 111 is sealed by the end caps 112 to prevent leakage of the electrolyte inside the battery cell 11. The electrode cell 11 is electrically connected to an external power source or an electrical device via an electrode terminal 113 located on the end cap 112, thereby realizing the charging and discharging function of the battery 100. In the present application, two electrode terminals 113 with opposite polarities are respectively located on the end caps of the two end portions of the battery cells 11. In the column direction L, the adjacent battery cells 11 may be connected in series or in parallel, which is determined depending on the power demand of the battery 100.

The reinforcing plate 2 mentioned in the embodiments of the present application may be made of a material such as metal or rigid plastics, and the material of the reinforcing plate 2 may be aluminum. The reinforcing plate 2 can be made by a stamping process. The reinforcing plate 2 can be fixedly connected to the casing 111 of the battery cell 11 by bonding. In order to be different from the frame structure of the battery 100, the number of reinforcing plates 2 is at least one, and the size of each reinforcing plate 2 is smaller than the size of the battery in the column direction L. The reinforcing plate 2 is a reinforcing member outside the frame of the battery 100, and does not cover an entire surface of the entire column of batteries, so that the air permeability and heat dissipation performance of the battery 100 can be improved in the case where the strength is met.

Specifically, as shown in conjunction with FIGS. 1 and 2, the battery cells 11 in the battery cell matrix 1 may be arranged in two forms: one is with the column direction L as a vertical direction, that is, the adjacent battery cells 11 in the same column are oppositely connected in the form of "standing", and joints of the adjacent battery cells 11 are fixedly connected (for example, welded) to form a battery cell column, and then arranged in a lateral direction, thereby constructing the battery cell matrix 1 in which the battery cells 11 are all in the standing form. The other one is with the column direction L as a lateral direction as shown in FIG. 1, that is, the adjacent battery cells 11 in the same column are oppositely connected in the form of "lying-flat", and joints of the adjacent battery cells 11 are fixedly connected (for example, welded) to form a battery cell column, and then arranged in the lateral direction, thereby constructing the battery cell matrix 1 in which the battery cells 11 are all in the lying-flat form.

In the present application, in the case of the battery cell matrix 1 in a lying-flat form, the battery 100 according to the embodiment of the present application further includes at least one reinforcing plate 2, for example, M=2 and N=2, when M and N are the minimum unit 2, the battery 100 includes one reinforcing plate 2. When the reinforcing plate 2 is used, the reinforcing plate 2 extends in the row direction H and is fixed to the casing 111 of the battery cells 11 in two columns and two rows. In this way, the reinforcing plate 2 can completely cover the joints where the adjacent battery cells 11 are butted by the electrode terminals 113, and at the same time, the reinforcing plate 2 is fixedly connected with the casing 111 of the battery cells 11.

With the above arrangement, the reinforcing plate 2 which forms a fixed connection can play a role of fixing connection and limiting the position of the casings 111 of the two adjacent battery cells 11 which are formed opposite each other. When the battery 100 is in use, after the vibration of the environment is transmitted to the battery 100, the reinforcing plate 2 can effectively reduce the relative movement of the casing 111 of the adjacent battery cells 11 along the respective degrees of freedom, thereby effectively improving the strength of the fixed connection of the battery cells 11, further effectively improving the stability of the connection of the battery 100 and prolonging the service life of the battery 100. In addition, the reinforcing plate 2 covers the outer area where two adjacent battery cells 11 are electrically connected, and can also prevent external foreign matters from entering the electrical connection area, so as to protect the electrical connection of the battery 100 from short circuit or disconnection caused by the foreign matters, and enhance the safety of the battery 100.

In some embodiments, the battery 100 may include a plurality of reinforcing plates 2 that are spaced in the column direction L. As shown in FIG. 1, when M > 2 and N > 2, the battery cell matrix 1 includes a plurality of battery cells 11 arranged in M rows and N columns, and adjacent battery cells 11 are formed opposite to each other, thereby forming an electrical connection area formed after a plurality of adjacent battery cells 11 are connected opposite to each other extending in the row direction H and spaced in the column direction. The plurality of reinforcing plates 2 mentioned in the embodiments of the present application refer to a plurality of individual strip-shaped plates that can be used to fixedly connect the casings 111 of all adjacent battery cells 11 that are formed opposite to each other. The plurality of reinforcing plates 2 mentioned in the embodiments of the present application are arranged at intervals in the column direction L, i.e., they are matched with the electrical connection area formed after the adjacent battery cells 11 are connected opposite to each other.

With the above settings, a plurality of reinforcing plates 2 are provided so that the casings 111 of all adjacent battery cells 11 that are formed opposite to each other can be fixedly connected. However, it is not a simple fixing of a whole plate. In the case where the strength is met, the minimum plate area is used, which can not only effectively improve the connection strength after fixing and connecting each butt-joint part, but also reduce the overall volume and weight of the battery 100 and improve the energy density of the battery 100.

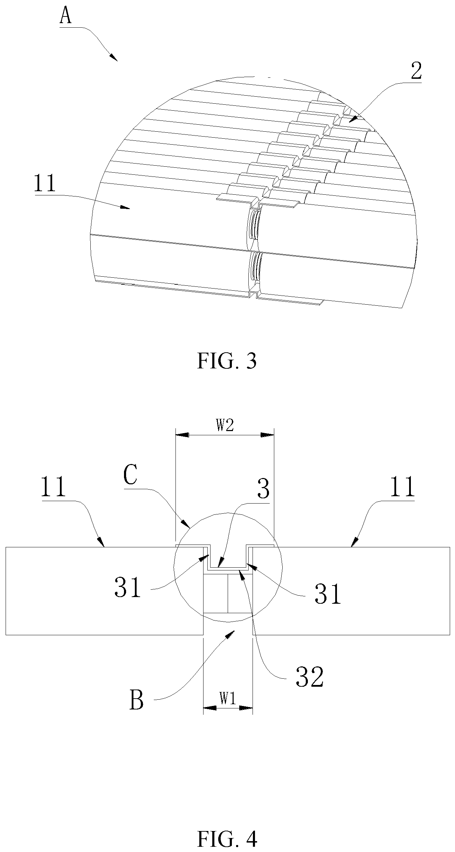

In some embodiments, as shown in FIGS. 3-4, after two adjacent battery cells 11 are opposed by electrode terminals 113 in the column direction L, an electrical connection area B is formed between opposite end caps 112 (as shown in FIG. 4), and each of the reinforcing plates 2 is respectively arranged so as to cover the electrical connection area B between the battery cells 11 in two adjacent rows among the M rows. In the column direction L, the electrical connection area B has a first width W 1, and the reinforcing plate 2 has a second width W2, and the second width is greater than the first width in the range of 20 mm to 100 mm.

A cover area of the electrode terminal 113 mentioned in the embodiment of the present application on the end cap 112 is smaller than an area of the end cap, and the electrode terminal 113 protrudes from the end cap 112 by a certain protruding height in the direction away from the inside of the battery cell 11, so that the electrode terminal 113 is formed into a cylindrical structure protruding from the end cap 112. The electrical connection area B of the present invention is a space formed between adjacent end caps 112 in the column direction L, in which two electrode terminals 13 are electrically connected. The electrical connection may be direct butt welding or welding connection through an adapter, and may also be direct compression or compression fit through elastic parts.

The cover mentioned in the embodiment of the present application means that after the reinforcing plate 2 is fixed to the casing 111 of the battery cells 11 in the two adjacent rows among the M rows. The electrical connection area B is located at a side area of the reinforcing plate 2 facing an interior of the battery 100, thereby enabling the reinforcing plate 2 to cross the casing 111 of two adjacent battery cells 11 and be fixedly connected with the casing 111, thereby strengthening and protecting the electrical connection between the battery cells 11.

As shown in conjunction with FIG. 4, a first width W1 mentioned in the embodiment of the present application refers to a distance between two end caps 112 between adjacent battery cells 11 formed opposite in the column direction L. A second width W2 mentioned in the embodiment of the present application refers to a size of the reinforcing plate 2 in the column direction L when the reinforcing plate 2 is a strip-shaped plate portion having a rectangular shape in the row direction H. In this embodiment, the reinforcing plate 2 may not completely cover the battery cells 11, but only need to cover the electrical connection area B within a certain size range. In this way, the strength of the fixed joint between the adjacent battery cells 11 formed opposite to each other can be improved by the reinforcing plate 2, and meanwhile, the material used for the reinforcing plate 2 can be saved, and the manufacturing cost of the reinforcing plate 2 can be reduced. Also, the air permeability and heat dissipation of the battery 100 can be increased.

In some embodiments, as shown in FIGS. 3-7, the battery 100 may further include a limiting member 3 disposed on a side of the reinforcing plate 2 that is fitted to the battery cells 11, the limiting member 3 extending in the row direction H, wherein the limiting member 3 is located in the electrical connection area B between the battery cells 11 in the two adjacent rows among the M rows.

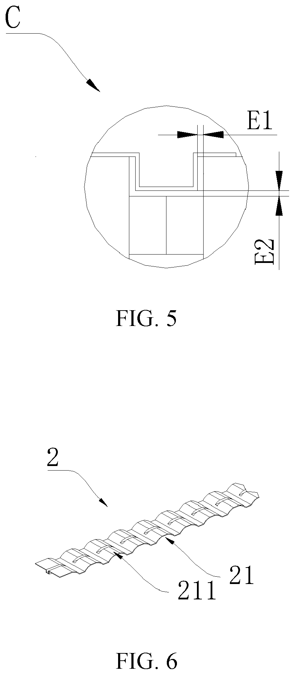

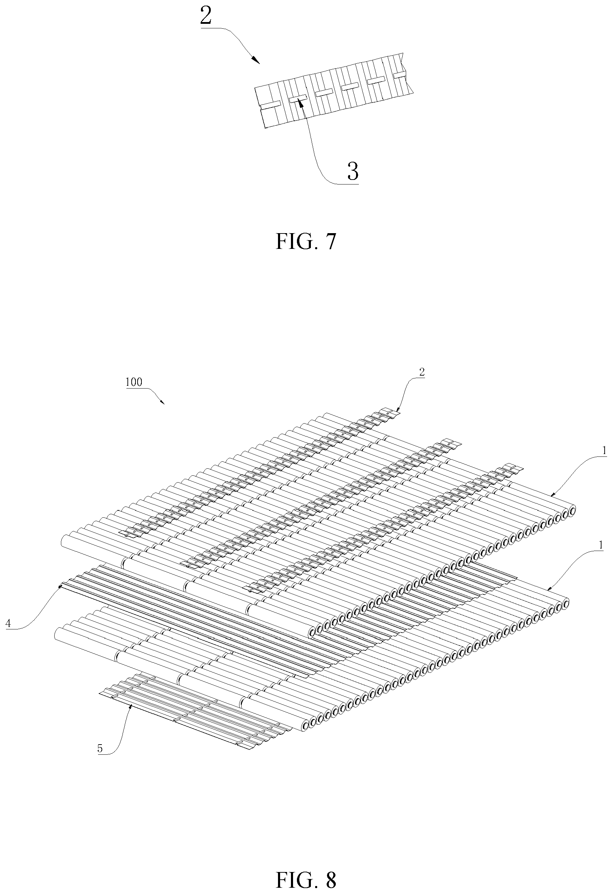

The limiting member 3 mentioned in the embodiment of the present application can be obtained by an integral molding process with the reinforcing plate 2, that is, the limiting member 3 can be processed by stamping the reinforcing plate 2 (as shown in FIGS. 4 and 5), or it can be a separate member fixedly connected to the reinforcing plate 2. The limiting members 3 may be continuously extended in the row direction H to the size of the entire reinforcing plate 2 in the row direction H, may also be continuously extended across a plurality of battery cells, and may also be individually formed in an electrical connection region B of a single column of battery cells. When, for example, a stamping depth is greater than or equal to a height of an arc of the reinforcing plate 2, an integrally continuous limiting member 3 can be formed. When the stamping depth is less than the height of the arc of the reinforcing plate 2, spaced limiting members 3 may be formed as shown in FIGS. 6 and 7, for example.

In this embodiment, the limiting members 3 located in the electrical connection area B can effectively fill a recessed area. Thus, when the battery 100 is in use, upon the vibration generated in the environment being transmitted to the battery 100, on the one hand, the reinforcing plate 2 is fixed to the casing 111 of the adjacent battery cells 11 formed opposite to each other, so that the dislocation of the adjacent battery cells 11 formed opposite to each other in the row direction H can be effectively reduced, from resulting in electrical connection failure. On the other hand, the limiting member 3 can effectively reduce the relative movement of the adjacent battery cells 11 formed opposite in the column direction L, thereby further improving the connection and overall strength of the battery 100. Further, the formed limiting members 3 can be constructed as reinforcing ribs of the reinforcing plate 2, so that the overall structural strength of the reinforcing plate 2 can also be effectively improved.

In some embodiments, as shown in FIGS. 4 and 5, the limiting member 3 may include two vertical walls 31 arranged in parallel and opposite, the vertical walls 31 connected perpendicularly to the reinforcing plate 2 and parallel to the end caps 112 of the battery cell 11; wherein a first preset distance E1 is arranged between the vertical wall 31 and the end cap 112.

The vertical wall 31 mentioned in the embodiment of the present application refers to a wall surface perpendicularly connected with the reinforcing plate 2, which can be obtained by integral molding with the reinforcing plate 2 or may be a separate plate part fixed on the reinforcing plate 2. The first preset distance E1 mentioned in the embodiment of the present application may be constructed as a gap formed between the vertical wall 31 and the end cap of the battery cell 11. In this embodiment, the limiting member 3 is parallel to the end cap 112 between the adjacent battery cells 11, so that the control accuracy of the gap between the vertical wall 31 and the end cap 112 can be improved.

In some embodiments, as shown in FIGS. 4 and 5, the limiting member 3 may further include a transverse wall 32 for connecting the two vertical walls 31; wherein a second preset distance E2 is arranged between the transverse wall 32 and the electrode terminal 113 of the battery cell 11.

The transverse wall 32 mentioned in the embodiment of the present application refers to a wall surface for connecting the two vertical walls 31, which can be obtained by integral molding with the reinforcing plate 2, or may be a separate plate portion fixedly connecting the two vertical walls 31. The second preset distance E2 mentioned in the embodiment of the present application may be constructed as a gap formed between the transverse wall 32 and the electrode terminal 113 of the battery cell 11. In this embodiment, the overall strength of the two vertical walls 31 of the limiting member 3 can be improved by providing the transverse wall 32 to connect the two vertical walls 31.

In some embodiments, sizes of the first preset distance E1 and the second preset distance E2 range from 1 mm to 3 mm, preferred to 1.5 mm. With this setting, on the one hand, the formed gap can more facilitate the insertion of the limiting member 3 into the electrical connection area B. On the other hand, it can effectively avoid the contact or interference between the limiting member 3 and the end caps 112 and electrode terminals 113 of the battery cell 11, from affecting the electrical performance of the battery 100, especially when the limiting member 3 is made of a conductive material, the setting of the preset distance becomes necessary. At the same time, the gap is relatively small, which can also limit the excessive relative movement between two battery cells 11.

In some embodiments, as shown in conjunction with FIGS. 6 and 7, a plurality of receiving grooves 21 can be formed on the reinforcing plate 2, each of which extends in the column direction L and is continuously arranged in the row direction H, the receiving grooves 21 are used for mounting the battery cells 11; wherein the receiving grooves 21 are constructed to adapt to surfaces of the battery cells 11.

The receiving groove 21 mentioned in the embodiments of the present application refers to a groove capable of mounting the battery cell 11 and partially covering the outer wall of the battery cell 11. According to the embodiment of the present application, the receiving groove 21 extends along the column direction L, which means that the receiving groove 21 may be a through groove or a non-through groove with a limit formed at both ends. The continuous arrangement of the receiving grooves 21 in the row direction H mentioned in the embodiment of the present application means that adjacent receiving grooves 21 may be directly connected or may be connected by a connection surface. The adaptation mentioned in the embodiment of the present application means that the formation of the receiving groove 21 can be adapted according to the shape of the battery cell 11, for example, the receiving groove 21 can be used for installing the battery cell 11 with a cylindrical structure or the battery cell 11 with a cuboid structure, and only the receiving groove 21 needs to be constructed as a matched curved groove or a rectangular groove.

With the above settings, on the one hand, the formed receiving grooves 21 are adapted to the surfaces of the battery cells 11, the reinforcing plate 2 and the surfaces of the casings 111 of the battery cells 11 can be better bonded, so that not only the fixing strength in the column direction L is improved, but also a connection area between the reinforcing plate 2 and the casings 111 of the battery cells 11 is improved, and the arrangement strength among a plurality of battery cells in the row direction H is improved. On the other hand, the formed receiving grooves 21 can be further constructed as reinforcing ribs of the reinforcing plate 2 to further improve the overall structural strength of the reinforcing plate 2.

In some embodiments, in conjunction with FIG. 6, rib structures 211 are also formed within each of the receiving grooves 21, and the rib structures 211 extend in the column direction L. The rib structure 211 mentioned in the embodiment of the present application may be constructed as but is not limited to a plane formed at a groove bottom of the receiving groove 21 which extends in the column direction L. The matching accuracy with the surfaces of the battery cells 11 can be further improved through the arrangement of the rib structures 211, so as to improve the limiting accuracy. The self-strength of the reinforcing plate 2 can be further improved to improve the overall connection strength of the battery 100.

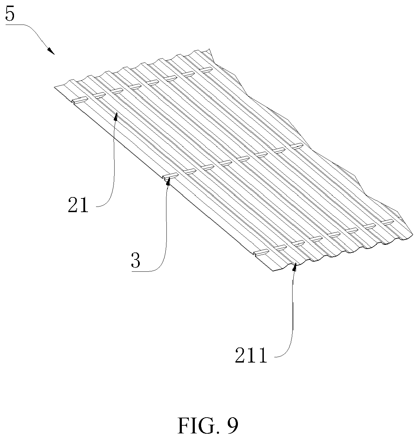

In some embodiments, as shown in FIGS. 8 and 9, the battery 100 may include: multiple layers of battery cell matrices 1 stacked and arranged in a vertical direction G, and a reinforcing plate 2 being arranged on a top surface of the multiple layers of battery cell matrices 1; an intermediate support plate 4 disposed between adjacent battery cell matrices 1 for supporting and/or cooling the battery cells 11; and a reinforcing backplane 5 arranged on a bottom surface of the multiple layers of battery cell matrices 1, wherein the reinforcing backplane 5 is constructed as a rectangular plate-like structure with a row direction H and a column direction L, and is fixed to a casing 111 of a battery cell 11 of a battery cell matrix 1 at a bottom layer.

The multiple layers of battery cell matrix 1 mentioned in the embodiment of the present application refers to, for example, a lying-flat battery cell matrix 1, and a plurality of battery cell matrices 1 are stacked and arranged in a vertical direction. The intermediate support plate 4 mentioned in the embodiment of the present application may be a plate portion only for support or a cooling member or a cooling plate for thermal management. The reinforcing backplane 5 mentioned in the embodiment of the present application may be made of a metallic material. The reinforcing backplane 5 can be made of aluminum, rigid plastic or the like. The reinforcing backplane 5 can be made by stamping or injection molding. The reinforcing plate 5 can be fixedly connected to the casing 111 of the battery cell 11 by bonding. The reinforcing backplane 5 may be provided as a strip plate similar to the reinforcing plate 2, and may be structurally integrally formed by directly connecting at least two reinforcing members 2 in the column direction L. The stiffness and strength of the reinforcing backplane 5 itself can be further enhanced by providing the reinforcing backplane 5 as a plate with a large area. When the reinforcing backplane 5 is provided at the bottom of the battery 100, further support can be provided for the battery 100.

In this embodiment, as shown in FIG. 8, in the case of the lying-flat battery cell matrix 1, the battery 100 of this embodiment is provided with multiple layers of battery cell matrices 1, and an intermediate support plate 4 is provided between adjacent battery cell matrices 1 for supporting and/or cooling the battery cells 11. The reinforcing plate 2 described above is provided on the top surface of the multiple layers of battery cell matrices 1 to improve the strength of the fixed joint of the battery cell matrices 1 on the top layer. In this embodiment, a reinforcing backplane 5 is also provided, and the reinforcing backplane 5 is fixed to the casing 111 of the battery cells 11 of the battery cell matrix 1 at the bottom layer. With this setting, the reinforcing backplane 5 has the same effect of improving the strength of the fixed joint as the reinforcing plate 2, and at the same time, since it is arranged at the bottom of the battery 100 and is arranged in a rectangular plate-like structure with a row direction H and a column direction L, it has a certain supporting function, thereby making the overall structure of the battery 100 more stable.

In some embodiments, as shown in conjunction with FIG. 9, the intermediate support plate 4 and/or the reinforcing backplane 5 are formed with: a limiting member 3; and/or a receiving groove 21; and/or a rib structure 211. The limiting member 3 and/or the receiving groove 21 and/or the rib structure 211 being formed on the intermediate support plate 4 and/or the reinforcing backplane 5 mentioned in the embodiments of the present application means that the limiting member 3, the receiving groove 21 and the rib structure 211 may be formed on the intermediate support plate 4 and/or the reinforcing backplane 5 in the same arrangement as described above. With this setting, on the one hand, the limiting member 3, the receiving groove 21 and the rib structure 211 formed on the intermediate support plate 4 and/or the reinforcing backplane 5 have the same technical effects as the limiting member 3, the receiving groove 21 and the rib structure 211 described above, which are not described here since they have the same technical effects. On the other hand, the limiting member 3, the receiving groove 21 and the rib structure 211 formed on the intermediate support plate 4 and/or the reinforcing backplane 5 can also limit the relative movement of adjacent (including upper and lower layers, in the column direction L and the row direction H) battery cells 11, thereby maintaining the consistency of the connection and arrangement positions of the battery cells 11 in the battery 100.

In some embodiments, thickness of the reinforcing plate 2 and/or the reinforcing backplane 5 range from 0.5 mm to 2 mm. With this setting, on the premise of satisfying the strength requirement, using a thinner reinforcing plate 2 and/or a reinforcing backplane 5 can reduce the overall volume of the battery 100, so as to improve the energy density of the battery 100.

The embodiment of the invention also provides an electrical device, which includes a battery 100 described in the above embodiments, and the battery 100 is used for providing electric energy. The battery 100 described in the embodiment of the present application is applicable to various electrical devices using the battery 100. For example, mobile phones, portable devices, notebook computers, battery cars, electric cars, ships, spacecraft, electric toys and electric tools, etc. For example, the spacecraft include airplanes, rockets, space shuttles, spaceships and so on. The electric toys include fixed or mobile electric toys, for example, game machines, electric car toys, electric ship toys and electric plane toys, etc. The electric tools include metal cutting electric tools, grinding electric tools, assembly electric tools and railway electric tools, such as electric drills, electric grinders, electric wrenches, electric screwdrivers, electric hammers, impact electric drills, concrete vibrators and electric planers.

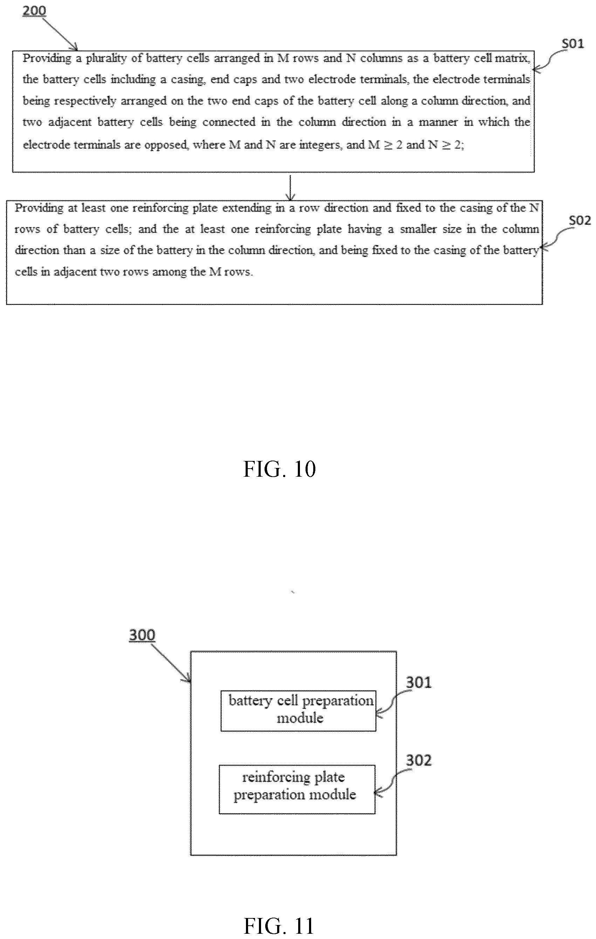

The battery 100 of the embodiment of the present application has been described above with reference to FIGS. 1 to 9, and a preparation method 200 and a preparation device 300 of the battery of the embodiment of the present application will be described below with reference to FIG. 10, where portions not described in detail can be referred to the preceding embodiments.

In particular, FIG. 10 provides a flow chart of the preparation method 200 of the battery, including: S01: providing a plurality of battery cells 11 arranged in M rows and N columns as a battery cell matrix 1, the battery cells 11 including a casing 111, end caps 112 and two electrode terminals 113, the electrode terminals 113 being respectively arranged on the two end caps 112 of the battery cell 11 along a column direction L, and two adjacent battery cells 11 being connected in the column direction in a manner in which the electrode terminals 113 are opposed, wherein M and N are integers, and M ≥ 2 and N ≥ 2; and S02: providing at least one reinforcing plate 2 extending in a row direction H and fixed to the casing 111 of the N rows of battery cells 11; and the at least one reinforcing plate 2 having a smaller size in the column direction L than a size of the battery cells in the column direction, and being fixed to the casing 111 of the battery cells 11 in two adjacent rows among the M rows.

Specifically, as shown in conjunction with FIG. 1, the battery cells 11 in the battery cell matrix 1 may be arranged in two forms: one is with the row direction L as a vertical direction, that is, the adjacent battery cells 11 in the same column are oppositely connected in the form of "standing", and joints of the adjacent battery cells 11 are fixedly connected (for example, welded) to form a battery cell column, and then arranged in a lateral direction, thereby constructing the battery cell matrix 1 in which the battery cells 11 are all in the standing form. The other one is with the column direction L as a lateral direction as shown in FIG. 1, that is, the adjacent battery cells 11 in the same column are oppositely connected in the form of "lying-flat", and joints of the adjacent battery cells 11 are fixedly connected (for example, welded) to form a battery cell column, and then arranged in the lateral direction, thereby constructing the battery cell matrix 1 in which the battery cells 11 are all in the lying-flat form. In the present application, in the case of the battery cell matrix 1 in a lying-flat form, the battery 100 according to the embodiment of the present application further includes at least one reinforcing plate 2, for example, M=2 and N=2, when M and N are the minimum unit 2, the battery 100 includes one reinforcing plate 2. When the reinforcing plate 2 is used, the reinforcing plate 2 extends in the row direction H and is fixed to the casing 111 of the battery cells 11 in two columns and two rows. In this way, the reinforcing plate 2 can completely cover the joints where the adjacent battery cells 11 are butted by the electrode terminals 113, and at the same time, the reinforcing plate 2 is fixedly connected with the casing 111 of the battery cells 11. With this arrangement, the reinforcing plate 2 which forms a fixed connection can play a role of fixing connection and limiting the position of the casings 111 of the two adjacent battery cells 11 which are formed opposite each other. When the battery 100 is in use, after the vibration of the environment is transmitted to the battery 100, the reinforcing plate 2 can effectively reduce the relative movement of the casing 111 of the adjacent battery cells 11, thereby effectively improving the strength of the fixed connection of the battery cells 11, further effectively improving the stability of the connection of the battery 100 and prolonging the service life of the battery 100. In addition, the reinforcing plate 2 covers the outer area where two adjacent battery cells 11 are electrically connected, and can also prevent external foreign matters from entering the electrical connection area, so as to protect the electrical connection of the battery 100 from short circuit or disconnection caused by the foreign matters, and enhance the safety of the battery 100.

In some embodiments, the method further includes: providing a plurality of reinforcing plates 2 that are spaced in the column direction L. With this setting, a plurality of reinforcing plates 2 are provided so that the casings 111 of all adjacent battery cells 11 that are formed opposite to each other are fixedly connected. However, it is not a simple fixing of a whole plate. In the case where the strength is met, the minimum plate area is used, which can not only effectively improve the connection strength after fixing and connecting each butt-joint part, but also reduce the overall volume of the battery 100 and improve the energy density of the battery 100.

In some embodiments, the method further includes: in the column direction L, after two adjacent battery cells 11 are opposed through electrode terminals 113, forming an electrical connection area B between opposite end caps 112 of the two adjacent battery cells 11, and each reinforcing plate 2 being respectively arranged to cover the electrical connection area B between the battery cells 11 of two adjacent rows among the M rows, wherein in the column direction L, the electrical connection area B has a first width, the reinforcing plate 2 has a second width, and the second width is larger than the first width in a range of 20 mm to 100 mm. In this embodiment, the reinforcing plate 2 may not completely cover the battery cells 11, but only need to cover the electrical connection area B within a certain size range. In this way, the strength of the fixed joint between the adjacent battery cells 11 formed opposite to each other can be improved by the reinforcing plate 2, and the material used for the reinforcing plate 2 can be saved, and the manufacturing cost of the reinforcing plate 2 can be reduced.

In some embodiments, the method further includes: providing a limiting member 3 disposed on a side of the reinforcing plate 2 that is fitted to the battery cells 11, the limiting member 3 extending in the row direction H, wherein the limiting member 3 is located in an electrical connection area B between the battery cells 11 in two adjacent rows among the M rows. In this embodiment, the limiting members 3 located in the electrical connection area B can effectively fill a recessed area. Thus, when the battery 100 is in use, upon the vibration generated in the environment being transmitted to the battery 100, on the one hand, the reinforcing plate 2 is fixed to the casing 111 of the adjacent battery cells 11 formed opposite to each other, so that the dislocation of the adjacent battery cells 11 formed opposite to each other in the row direction H can be effectively reduced, from resulting in electrical connection failure. On the other hand, the limiting member 3 can effectively reduce the relative movement of adjacent battery cells 11 formed opposite in the column direction L, thereby further improving the connection and overall strength of the battery 100. Further, the formed limiting members 3 can be constructed as reinforcing ribs of the reinforcing plate 2, so that the overall structural strength of the reinforcing plate 2 can also be effectively improved.

In some embodiments, the method includes: providing multiple layers of battery cell matrices 1 stacked and arranged in a vertical direction, and a reinforcing plate 2 being arranged on a top surface of the multiple layers of battery cell matrices 1; providing an intermediate support plate 4 disposed between adjacent battery cell matrices 1; and providing a reinforcing backplane 5 arranged on a bottom surface of the multiple layers of battery cell matrices 1, wherein the reinforcing backplane 5 is constructed as a rectangular plate-like structure with a row direction H and a column direction L, and is fixed to a casing 111 of a battery cell 11 of a battery cell matrix 1 at a bottom layer. In this embodiment, as shown in FIG. 2, in the case of the lying-flat battery cell matrix 1, the battery 100 of this embodiment is provided with multiple layers of battery cell matrices 1, and an intermediate support plate 4 is provided between adjacent battery cell matrices 1 for supporting and/or cooling the battery cells 11. The reinforcing plate 2 described above is provided on the top surface of the multiple layers of battery cell matrices 1 to improve the strength of the fixed joint of the battery cell matrices 1 on the top layer. In this embodiment, a reinforcing backplane 5 is also provided, and the reinforcing backplane 5 is fixed to the casing 111 of the battery cells 11 of the battery cell matrix 1 at a bottom layer. With this setting, the reinforcing backplane 5 has the same effect of improving the strength of the fixed joint as the reinforcing plate 2, and at the same time, since it is arranged at the bottom of the battery 100 and is arranged in a rectangular plate-like structure with a row direction H and a column direction L, it has a certain supporting function, thereby making the overall structure of the battery 100 more stable.

FIG. 11 provides a schematic structural diagram of the preparation device 300 of the battery, including: a battery cell preparation module 301 for preparing a plurality of battery cells 11 arranged in M rows and N columns as a battery cell matrix 1, the battery cells 11 including a casing 111, end caps 112 and two electrode terminals 113, the electrode terminals 113 being respectively arranged on the two end caps 112 of the battery cell 11 along a column direction L, and two adjacent battery cells 11 being connected in the column direction L in a manner in which the electrode terminals 113 are opposed, wherein M and N are integers, and M ≥ 2 and N ≥ 2; and a reinforcing plate preparation module 302 for preparing at least one reinforcing plate 2 extending in a row direction H and fixed to the casing 111 of the N rows of battery cells 11; and the at least one reinforcing plate 2 having a smaller size in the column direction L than a size of the battery cells in the column direction, and being fixed to the casing 111 of the battery cells 11 in two adjacent rows among the M rows.

Finally, it needs to be noted that, the above embodiments are only used to illustrate the technical solution of the present application and not to limit it. Although the present application has been described in detail with reference to the foregoing embodiments, it needs to be understood by those of ordinary skill in the art that the technical solution described in the foregoing embodiments can still be modified or some of the technical features thereof can be equivalently replaced. However, these modifications or substitutions do not depart the essence of the corresponding technical solution from the spirit and scope of the technical solution of each embodiment of the present application.

## Claims

1. A battery comprising:
a battery cell matrix (1) comprising a plurality of battery cells (11) arranged in M rows and N columns, the battery cells (11) comprising a casing (111), end caps (112) and two electrode terminals (113), the electrode terminals (113) being respectively arranged on the two end caps (112) of the battery cells (11) along a column direction, and two adjacent battery cells (11) being connected in the column direction in a manner in which the electrode terminals (113) are opposed, wherein M and N are integers, and M ≥ 2 and N ≥ 2; and
at least one reinforcing plate (2) extending in a row direction and fixed to the casing (111) of the N rows of battery cells (11), and the at least one reinforcing plate (2) having a smaller size in the column direction than a size of the battery cells in the column direction, and being fixed to the casing (111) of the battery cells (11) in two adjacent rows among the M rows.

2. The battery according to claim 1, wherein the battery comprises a plurality of reinforcing plates (2) that are spaced in the column direction.

3. The battery according to claim 2, wherein in the column direction, after the two adjacent battery cells (11) are opposed through the electrode terminals (113), an electrical connection area is formed between the opposite end caps (112), and each of the reinforcing plates (2) is respectively arranged to cover the electrical connection area between the battery cells (11) in the two adjacent rows among the M rows, wherein in the column direction, the electrical connection area has a first width, the reinforcing plates (2) have a second width, and the second width is larger than the first width in a range of 20 mm to 100 mm.

4. The battery according to any one of claims 1 to 3, wherein the battery further comprises a limiting member (3) disposed on a side of the reinforcing plate (2) that is fitted to the battery cells (11), the limiting member (3) extending in the row direction, wherein the limiting member (3) is located in the electrical connection area between the battery cells (11) in the two adjacent rows among the M rows.

5. The battery according to claim 4, wherein the limiting member (3) comprises two vertical walls (31) arranged in parallel and opposite, the vertical walls (31) connected perpendicularly to the reinforcing plate (2) and parallel to the end caps (112) of the battery cells (11), wherein a first preset distance is arranged between the vertical walls (31) and the end caps (112).

6. The battery according to claim 5, wherein the limiting member (3) further comprises a transverse wall (32) for connecting the two vertical walls (31), wherein a second preset distance is arranged between the transverse wall (32) and the electrode terminals (113) of the battery cells (11).

7. The battery according to claim 6, wherein sizes of the first preset distance and the second preset distance range from 1 mm to 3 mm.

8. The battery according to any one of claims 4 to 7, wherein a plurality of receiving grooves (21) are formed on the reinforcing plate (2), each of the receiving grooves (21) extends in the column direction and is continuously arranged in the row direction, and the receiving grooves (21) are used for mounting the battery cells (11), wherein the receiving grooves (21) are constructed to adapt to surfaces of the battery cells (11).

9. The battery according to claim 8, wherein rib structures (211) are also formed within each of the receiving grooves (21), the rib structures (211) extending in the column direction.

10. The battery according to claim 9, wherein the battery comprises:
multiple layers of battery cell matrices (1) stacked and arranged in a vertical direction, the reinforcing plate (2) being arranged on a top surface of the multiple layers of battery cell matrices (1);
an intermediate support plate (4) disposed between adjacent battery cell matrices (1) for supporting and/or cooling the battery cells (11); and
a reinforcing backplane (5) arranged on a bottom surface of the multiple layers of battery cell matrices (1),
wherein the reinforcing backplane (5) is constructed as a rectangular plate-like structure with the row direction and the column direction, and is fixed to the casing (111) of the battery cell (11) of the battery cell matrix (1) at a bottom layer.

11. The battery according to claim 10, wherein the intermediate support plate (4) and/or the reinforcing backplane (5) are formed with: the limiting member (3); and/or the receiving grooves (21); and/or the rib structures (211).

12. The battery according to claim 10 or 11, wherein a thickness of the reinforcing plate (2) and/or the reinforcing backplane (5) range from 0.5 mm to 2 mm.

13. An electrical device comprising the battery of any one of claims 1 to 12 for supplying electrical energy.

14. A preparation method of a battery comprising:
providing a plurality of battery cells (11) arranged in M rows and N columns as a battery cell matrix (1), the battery cells (11) comprising a casing (111), end caps (112) and two electrode terminals (113), the electrode terminals (113) being respectively arranged on the two end caps (112) of the battery cell (11) along a column direction, and two adjacent battery cells (11) being connected in the column direction in a manner in which the electrode terminals (113) are opposed, wherein M and N are integers, and M ≥ 2 and N ≥ 2; and
providing at least one reinforcing plate (2) extending in a row direction and fixed to the casing (111) of the N rows of battery cells (11); and the at least one reinforcing plate (2) having a smaller size in the column direction than a size of the battery cells in the column direction, and being fixed to the casing (111) of the battery cells (11) in the two adjacent rows among the M rows.

15. The preparation method according to claim 14, wherein the method further comprises providing a plurality of reinforcing plates (2) that are spaced in the column direction.

16. The preparation method according to claim 15, wherein the method further comprises: in the column direction, after the two adjacent battery cells (11) are opposed through the electrode terminals (113), forming an electrical connection area between the opposite end caps (112) of the two adjacent battery cells (11), and each of the reinforcing plates (2) being respectively arranged to cover the electrical connection area between the battery cells (11) in the two adjacent rows among the M rows, wherein in the column direction, the electrical connection area has a first width, the reinforcing plates (2) have a second width, and the second width is larger than the first width in a range of 20 mm to 100 mm.

17. The preparation method according to any one of claims 14 to 16, wherein the method further comprises: providing a limiting member (3) disposed on a side of the reinforcing plate (2) that is fitted to the battery cells (11), the limiting member (3) extending in the row direction, wherein the limiting member (3) is located in the electrical connection area between the battery cells (11) in the two adjacent rows among the M rows.

18. The preparation method according to any one claims 14 to 17, wherein the method further comprises:
providing multiple layers of battery cell matrices (1) stacked and arranged in a vertical direction, and the reinforcing plate (2) being arranged on a top surface of the multiple layers of battery cell matrices (1);
providing an intermediate support plate (4) disposed between adjacent battery cell matrices (1); and
providing a reinforcing backplane (5) arranged on a bottom surface of the multiple layers of battery cell matrices (1), wherein the reinforcing backplane (5) is constructed as a rectangular plate-like structure with the row direction and the column direction, and is fixed to the casing (111) of the battery cell (11) of the battery cell matrix (1) at a bottom layer.

19. A preparation device of a battery comprising:
a battery cell preparation module (301) for preparing a plurality of battery cells (11) arranged in M rows and N columns as a battery cell matrix (1), the battery cells (11) comprising a casing (111), end caps (112) and two electrode terminals (113), the electrode terminals (113) being respectively arranged on the two end caps (112) of the battery cell (11) along a column direction, and two adjacent battery cells (11) being connected in the column direction in a manner in which the electrode terminals (113) are opposed, wherein M and N are integers, and M ≥ 2 and N >_ 2; and
a reinforcing plate preparation module (302) for preparing at least one reinforcing plate (2) extending in a row direction and fixed to the casing (111) of the N rows of battery cells (11); and the at least one reinforcing plate (2) having a smaller size in the column direction than a size of the battery cells in the column direction, and being fixed to the casing (111) of the battery cells (11) in two adjacent rows among the M rows.
